Europäisches Patentamt

European Patent Office

Office européen des brevets

(11) Veröffentlichungsnummer : **0 029 134**
**B1**

(12) **EUROPÄISCHE PATENTSCHRIFT**

(45) Veröffentlichungstag der Patentschrift :
03.08.83

(51) Int. Cl.³ : **H 04 M   1/60**

(21) Anmeldenummer : 80106558.2

(22) Anmeldetag : 25.10.80

(54) **Verstärkerschaltung mit vorgebbarem Wechselstrominnenwiderstand.**

(30) Priorität : 16.11.79 DE 2946306

(43) Veröffentlichungstag der Anmeldung :
27.05.81 Patentblatt 81/21

(45) Bekanntmachung des Hinweises auf die Patenterteilung : 03.08.83 Patentblatt 83/31

(84) Benannte Vertragsstaaten :
AT BE CH FR GB IT LI NL

(56) Entgegenhaltungen :
BE A 654 966
CH A 592 392
DE A 2 610 844
FR A 2 377 125
US A 3 789 155
US A 3 980 837
US A 4 071 713

(73) Patentinhaber : **Licentia Patent-Verwaltungs-GmbH**
**Theodor-Stern-Kai 1**
**D-6000 Frankfurt/Main 70 (DE)**

(72) Erfinder : **Rall, Bernhard, Dipl.-Ing.**
**Albecker Steige 67**
**D-7900 Ulm (DE)**

(74) Vertreter : **Schickle, Gerhard, Dipl.-Ing. et al**
**Licentia Patent-Verwaltungs-GmbH Theo-**
**dor-Stern-Kai 1**
**D-6000 Frankfurt/Main 70 (DE)**

« Verstärkerschaltung mit vorgebbarem Wechselstrominnenwiderstand »

Die Erfindung betrifft eine Verstärkerschaltung mit vorgebbarem Wechselstrominnenwiderstand mit Fernspeisung über eine Übertragungsleitung, über die gleichzeitig mit dem Speisestrom ein Wechselstromsignal von oder zu der Verstärkerschaltung übertragen wird, insbesondere für elektronische Fernsprechapparate.

In Fernmeldeanlagen werden die Endgeräte, wie z. B. die Fernsprechapparate über die Übertragungsleitung (Teilnehmeranschlußleitung) gespeist. Gleichzeitig mit dem Speisestrom wird ein Wechselstromsignal beim Sprechen von dem Fernsprechapparat ausgehend und beim Hören zum Fernsprechapparat hin, übertragen. Je nach Batteriespannung, Innenwiderstand der Speiseschaltung und zulässigem Leitungswiderstand der Fernmeldeleitung schwankt der Speisestrom zwischen 17 mA und 100 mA mit dem ein Fernsprechapparat seinen Betriebsstrom decken muß. Eine Tendenz zu noch kleineren Betriebsströmen ist unverkennbar. Gerade bei langen Teilnehmerleitungen und somit hohem Leitungswiderstand ist der Speisestrom niedrig und seitens des Fernsprechapparates werden hohe Ausgangssignalpegel erwartet, um die Leitungsdämpfungen zu überwinden. Gleichzeitig wird auf konstante übertragungstechnische Parameter Wert gelegt, wobei der große Temperatur- und Betriebsstrombereich einwandfrei funktionierende und in ihrer Funktion leicht zu durchschauende Schaltungen verlangt.

Aus der schweizer Patentschrift CH-PS 592 392 ist eine Verstärkerschaltung der im Oberbegriff des Anspruchs 1 genannten Art bekannt. Sie enthält ein Speiseglied zur Speisung mindestens eines Verstärkers, das aus einer an die beiden Adern der Teilnehmerleitung angeschlossenen Reihenschaltung eines Impedanzgliedes und eines spannungsbegrenzenden Elementes besteht. Das Impedanzglied ist dabei als gegengekoppelte Transistorschaltung und das spannungsbegrenzende Element als Zenerdiode mit parallel geschaltetem Speicherkondensator ausgebildet. Infolge der Reihenschaltung des Impedanzglieds mit dem Speiseglied steht infolge des Spannungsabfalls am Impedanzglied dem Speiseglied bei langen Teilnehmerleitungen nicht die maximale Klemmenspannung zur Verfügung, so daß gerade in diesem Fall, wo hohe Ausgangssignalpegel des Fernsprechapparates verlangt werden, mit Schwierigkeiten zu rechnen ist.

Die Funktionen « Signaleinspeisung in die Leitung » und « Erzeugung eines bestimmten vorgegebenen Abschlußwiderstandes » können in elektronischen Fernsprechapparaten auch durch einen Verstärker mit hohem Innenwiderstand für die Signaleinspeisung und eine zweite, dazu parallel liegende Schaltung mit dem geforderten Abschlußwiderstand realisiert werden.

Zur Erzeugung des gewünschten Abschlußwiderstandes kann die Reihenschaltung eines Kondensators mit einem Widerstand der geforderten Größe verwendet werden. Der Kondensator müßte jedoch eine Größe von etwa 10 μF haben und wäre daher nicht integrierbar.

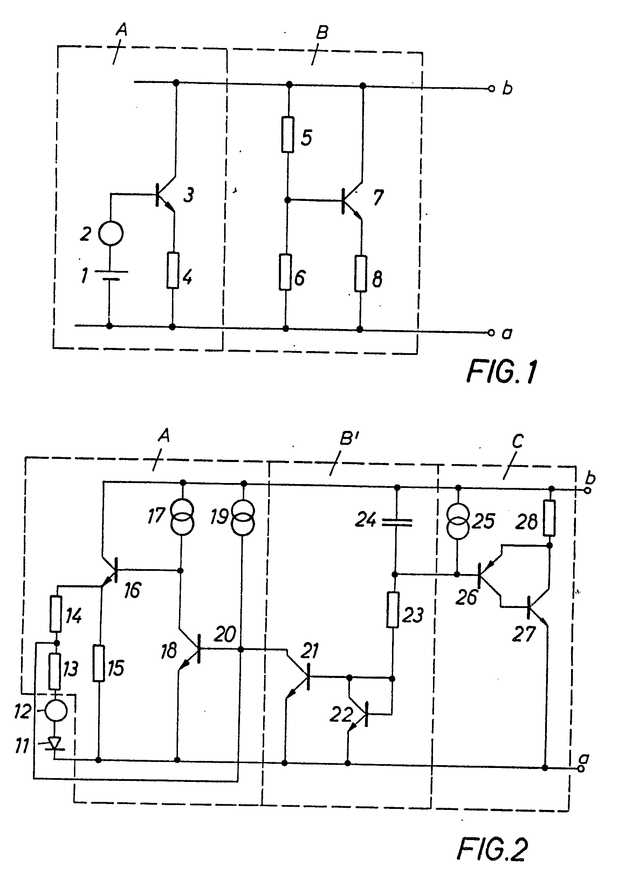

Wie Fig. 1 zeigt, läßt sich das Problem auch dadurch lösen, daß neben dem Verstärker A mit Signalquelle 2, Vorspannung 1 und einem durch einen Widerstand 4 im Emitter gegengekoppelten Transistor 3 ein getrennter Verstärker B mit einem im Emitter durch einen Widerstand 8 gegengekoppelten Transistor 7 mit Basisspannungsteilerwiderständen 5 und 6 verwendet wird, dessen Innenwiderstand durch geeignete Wahl der Widerstände 5, 6 und 8 auf den gewünschten Wert des Abschlußwiderstandes gebracht werden kann. Mit a und b sind in Fig. 1 die beiden Leitungen der Übertragungsleitung bezeichnet, von denen die Leitung b infolge der Gleichstromeinspeisung über die Übertragungsleitung stets positiv gegenüber der Leitung a bleibt.

Ist z. B. ein Abschlußwiderstand der Übertragungsleitung seitens des Endgerätes von 600 Ω gefordert und die Impedanz der Übertragungsleitung ebenfalls 600 Ω, dann arbeitet der Verstärker A für Wechselstromsignale auf einen Außenwiderstand von 300 Ω. Wird ferner ein Signalpegel von + 3 dBm am Ausgang des Verstärkers A gefordert, so muß der Verstärker A zwischen den Leitungen a und b eine Spitzenspannung von $U_p = 1{,}55$ V und einen Spitzenstrom von $I_p = 5{,}16$ mA aufbringen. Hierzu erfordert der Verstärker A einen Gleichstrom von mindestens 6 mA. Der Verstärker B zur Erzeugung eines Abschlußwiderstandes von 600 Ω nimmt von dem Wechselstrom des Verstärkers A die Hälfte, also 2,58 mA auf und muß folglich auf einen Ruhestrom von mindestens 3 mA eingestellt werden. Die Verstärker A und B nehmen somit zusammen etwa 9 mA auf. Da im ungünstigsten Fall das Endgerät lediglich 17 mA aus der Übertragungsleitung als sogenannten Schleifenstrom erhält, verbleiben lediglich 8 mA für den Bedarf der restlichen Elektronik des Endgerätes, was vielfach nicht ausreicht.

Ausgehend von der Überlegung, daß vom Endgerät in die Übertragungsleitung lediglich 2,58 mA als Spitzenstrom eingespeist werden, liegt der Erfindung die Aufgabe zugrunde, eine Verstärkerschaltung mit vorgebbarem Innenwiderstand der im Oberbegriff des Anspruchs 1 genannten Art anzugeben, die auch bei langen Übertragungsleitungen noch möglichst hohe Ausgangssignalpegel abgeben kann und dabei möglichst nur den Ruhestrom für einen tatsächlich an die Leitung abzugebenden maximalen Wechselstrom erfordert. Die Verstärkerschaltung soll außerdem möglichst einfach integrierbar und unempfindlich gegen Arbeitspunktschwankungen im Temperaturbereich − 25 °C bis + 100 °C sein.

Die Aufgabe wird durch die im Anspruch 1 angegebene Erfindung gelöst. Durch die erfindungsgemäßen Maßnahmen kann der Verstärker nicht nur den geforderten Signalstrom liefern, sondern besitzt einen Innenwiderstand, der durch eine bestimmte Bemessung der Gegenkopplung den geforderten Abschlußwiderstand hat, ohne daß durch den Abschlußwiderstand Signalenergie und Speisespannungsenergie verloren geht. Der eingesparte Ruhestrom der Verstärker A und B kann somit anderweitig im Endgerät verwendet werden und der die Speisespannung begrenzende Spannungsabfall am Impedanzglied wird vermieden. Die Lösung ermöglicht eine einfache Integration der Verstärkerschaltung. Der für die Gegenkopplung verwendete Widerstand wird gleichzeitig als Konstantspannungsquelle ausgenützt, so daß mittels eines an diesem Widerstand angeschlossen Querreglers in Abhängigkeit von dem Widerstand der Übertragungsleitung jeweils so viel Strom über den Querregler abgeleitet wird, daß die Spannung an der Verstärkerschaltung und damit an allen elektronischen Schaltungen des Teilnehmer endgerätes konstant bleibt und die Betriebsbedingungen auch im vorgegebenen Temperaturbereich eingehalten werden können. Durch diese Maßnahme steht der Verstärkerschaltung auch bei langen Übertragungsleitungen die maximal mögliche Betriebsspannung zur Verfügung.

Vorteilhafte Ausgestaltungen und Weiterbildungen der Erfindung sind in den Unteransprüchen angegeben. Anspruch 2 enthält eine vorteilhafte Ausgestaltung des Querreglers.

Um den Ruhestrom der Verstärkerschaltung auch bei extremen Temperaturverhältnissen möglichst konstant zu halten, ist es erforderlich, die Ankopplung der Signalspannung kondensatorlos an den Verstärkereingang vorzunehmen und den Temperaturgang ihrer Gleichstromvorspannung so zu wählen, daß sie an den Temperaturgang des Eingangs der Verstärkerschaltung angepaßt ist. Eine günstige Lösung hierfür gibt Anspruch 3.

Die Erfindung wird nun anhand eines in Fig. 2 dargestellten Ausführungsbeispiels näher erläutert. In Fig. 2 ist mit A die Verstärkerschaltung, mit B' die Schaltung zur Erzeugung des Gegenkopplungsstromes und mit C die Schaltung zur Spannungsstabilisierung mittels eines Querreglers bezeichnet.

Zunächst sei die Verstärkerschaltung mit vorgebbarem Wechselstrominnenwiderstand näher beschrieben, welche die Teile A und B' umfaßt. Die Schaltung wird ferngespeist über eine Übertragungsleitung, deren eine Leitung b positiv gegenüber der anderen Leitung a ist und über die gleichzeitig mit dem Speisestrom ein Wechselstromsignal von der Verstärkerschaltung ausgehend oder zur Verstärkerschaltung hinführend übertragen wird, wie es insbesondere bei elektronischen Endstellen von Fernmeldeanlagen, z. B. bei elektronischen Fernsprechapparaten, der Fall ist. Der vorgebbare Wechselstromwiderstand wird dadurch erzeugt, daß der Strom einer zwischen den Leitungen a und b der Übertragungsleitung angeschlossenen Reihenschaltung eines ohmischen Widerstandes 23 mit einem Kondensator 24 als Gegenkopplung der Verstärkerschaltung (A) zugeführt ist und der vorgebbare Wechselstromwiderstand durch die Endstufe der Verstärkerschaltung, also durch den Transistor 16 infolge der Gegenkopplung gebildet ist. In vorteilhafter Weise ist die Verstärkerschaltung als Stromverstärker ausgebildet.

Wie Fig. 2 zeigt, ist der Stromverstärker als zweistufiger Verstärker mit zwei NPN-Transistoren aufgebaut, bei dem der Emitter des ersten Transistors 18 mit der nagativen Leitung a der Übertragungsleitung, der Kollektor zum einen über eine Konstantstromquelle 17 mit der positiven Leitung b der Übertragungsleitung und zum anderen mit der Basis des zweiten Transistors 16 verbunden ist. Der Kollektor des zweiten Transistors ist mit der positiven Leitung b der Übertragungsleitung und der Emitter des zweiten Transistors 16 zum einen über einen ersten Widerstand 15 mit der negativen Leitung a der Übertragungsleitung und zum anderen über einen zweiten Widerstand 14 zum einen mit der Basis des ersten Transistors 18 und zum anderen über einen dritten Widerstand 13 mit der Signalquelle 12, die auch der Ausgang eines Vorverstärkers sein kann, verbunden.

Die Gegenkopplungsschaltung B' enthält die Reihenschaltung eines Kondensators 24 mit einem Widerstand 23. Der Kondensator 24 ist mit seinem freien Ende an die positive Leitung b der Übertragungsleitung und der Widerstand 23 an eine Diode 22 einer an die negative Leitung a liegenden, aus einer Diode 22 und einem dritten NPN-Transistor 21 bestehenden Stromspiegelschaltung angeschlossen, bei der der Kollektor des dritten Transistors 21 zum einen über eine Konstantstromquelle 19 mit der positiven Leitung b der Übertragungsleitung und zum anderen mit der Basis des ersten Transistors 18 verbunden ist.

Der Transistor 18 wird statt über einen Kollektorwiderstand mit einer Stromquelle 17 versorgt. Dadurch ist seine Verstärkung optimal und lediglich noch durch den Eingangswiderstand des Transistors 16, der im Ausführungsbeispiel etwa 40 kΩ beträgt, gegeben. Ist der Kollektorstrom des Transistors 18 beispielsweise 100 µA, so ist die Spannungsverstärkung des Transistors 18 etwa 150. Durch die hohe Spannungsverstärkung ist die Wechselspannung an der Basis des Transistors 18 niedrig und ein dort eingeprägter Strom wird verstärkt an den Ausgang des Verstärkers, dem Kollektor des Transistors 16, abgegeben, weshalb dieser Verstärkertyp auch mit Stromverstärker bezeichnet wird.

Weil an der Basis des Transistors 18, also am Punkt 20, praktisch keine Wechselspannung stehen kann, bestimmt der Signalstrom über den Widerstand 13 den Ausgangssignalstrom des Transistors 16 und damit den Ausgangssignalstrom des Verstärkers A.

Der Wechselstrominnenwiderstand der Verstärkerschaltung A zwischen den Leitungen a und b ohne Gegenkopplungsschaltung B' ist mit mehreren 10 kΩ sehr hoch. Zur Erzeugung des gewünschten Wechselstrominnenwiderstandes, der beispielsweise mit 600 Ω vorgegeben sein kann, ist gemäß der Erfindung die Gegenkopplungsschaltung B' vorgesehen. Diese ist über dem Kondensator 24, dem Widerstand 23 und dem Stromspiegel 22, 21 auf die Basis des Transistors 18 (Schaltungspunkt 20) und damit auf den Eingang der Verstärkerschaltung A geführt. Die Einspeisung an dieser Stelle hat den besonderen Vorteil, daß die Gegenkopplung ohne Rückwirkung auf die übrige Schaltung, wie z. B. auf die Signalquelle 12, ist.

Die Stromverstärkung des Verstärkers A ist

$$i_{16} = -u_{12}/R_{13} \cdot R_{14}/R_{15}$$

wobei $u_{12}$ die Wechselspannung der Signalquelle 12 und $i_{16}$ der Ausgangswechselstrom des Transistors 16 ist. Mit $R_{xy}$ ist der Widerstandswert eines Widerstandes xy bezeichnet.

Für den vorgebbaren Wechselstrominnenwiderstand gilt :

$$R_i \approx R_{23} \cdot R_{15}/R_{14}$$

Somit erhält man mit beispielsweise $R_{14} = 3$ kΩ und $R_{16} = 200$ Ω einen geforderten Wechselstrominnenwiderstand $R_i = 600$ Ω mit $R_{23} \approx 9$ kΩ.

Eine Weiterbildung der Verstärkerschaltung mit vorgebbarem Innenwiderstand sieht vor, daß der Gegenkopplungswiderstand 23, der in integrierter Technik infolge seines relativ hohen Wertes relativ viel Chip-Fläche erfordert, gleichzeitig zur Arbeitspunktstabilisierung der Verstärkerschaltung und damit aller sonstigen an die Übertragungsleitungen a und b angeschlossenen Einrichtungen verwendet wird.

Hierzu ist parallel zum Kondensator 24 eine Konstantstromquelle 25 geschaltet, die durch den ohmischen Widerstand 23 einen konstanten Strom treibt und an dem ohmischen Widerstand 23 ist ein zwischen die Übertragungsleitungen a und b geschalteter Querregler 26 bis 28 angeschlossen.

Die Stromquelle 25 liefert einen Gleichstrom durch den Widerstand 23, an dem eine Spannung $I_{25} R_{23}$ abfällt. Diese Gleichspannung, zuzüglich der Diodenspannung des als Diode geschalteten Transistors 22 ist praktisch konstant. An diese Gleichspannungsquelle ist der Querregler C angeschlossen. Der Querregler 26 bis 28 besteht aus einem PNP-Transistor 26 und einem vierten NPN-Transistor 27, die als komplementäre Darlington-Schaltung geschaltet sind.

Die als Eingang des Querreglers C dienende Basis des PNP-Transistors 26 ist zwischen dem ohmischen Widerstand 23 und dem Kondensator 24 der Reihenschaltung 23, 24 angeschlossen und der Emitter des PNP-Transistors 26 ist über einen Widerstand 28 mit der positiven Leitung b der Übertragungsleitung verbunden. Ferner ist der Emitter des NPN-Transistors 27 direkt mit der negativen Leitung a der Übertragungsleitung verbunden.

Der Querregler hat seine Steuerstrecke zwischen der Basis des Transistors 26 und der Leitung b. In vorteilhafter Weise sorgt der Kondensator 24 des Gegenkopplungskreises gleichzeitig dafür, daß die Steuerstrecke des Querreglers nicht mit der Wechselspannung der Leitung b ausgesteuert wird. Im Querreglerzweig fließt daher ein Gleichstrom, dessen Größe vom Widerstand der Übertragungsleitung abhängt. Bei niedrigem Widerstandswert der Übertragungsleitung würde ohne Querregler die Gleichspannung zwischen den Leitungen a und b entsprechend hoch sein. Die höhere Spannung würde den Querregler an seiner Steuerstrecke stärker aussteuern, so daß der ihn durchfließende Strom größer wird und dadurch ein größerer Spannungsabfall an dem Widerstand der Übertragungsleitung entsteht. Der Strom durch den Querregler regelt sich auf diese Weise so ein, daß die Spannung zwischen den Leitungen a und b praktisch konstant bleibt. Im Ausführungsbeispiel wurde eine Gleichspannung zwischen den Leitungen a und b von etwa 4,5 V durch einen Widerstand $R_{28} = 10$ Ω erzielt.

Durch den Transistor 27 des Querreglers fließt lediglich Gleichstrom, so daß er den Wechselstrominnenwiderstand der Verstärkerschaltung nicht merklich beeinflußt.

Der Strom der Stromquelle 25 fließt über den Widerstand 23 und in den Stromspiegel 22, 21. Dieser Strom wird durch die Stromquelle 19 kompensiert. Stromquelle 25 und 19 sind daher in integrierter Technik identisch aufgebaut.

Der Schaltungspunkt 20 der Verstärkerschaltung A zeigt den Temperaturgang einer mit einem geringen Gleichstrom (ca. 0,1 mA) in Flußrichtung durchflossenen Diode. In vorteilhafter Weise ist daher die Signalquelle 12 galvanisch an den Verstärker angekoppelt und die von der Signalquelle 12 zugeführte Signalspannung durch eine in Flußrichtung betriebene Diode 11 gegen Temperaturdrift stabilisiert. Daher fließt durch den Widerstand 13 lediglich ein Wechselstrom, so daß bei Temperaturänderungen der Schaltung der Arbeitspunkt des Verstärkers, insbesondere der des Transistors 16, stabil bleibt und somit für den Transistor 16 der geringstmögliche Ruhestrom ohne wesentliche Driftreserven gewählt werden kann.

Der Ruhestrom des Transistors 16 kann im Ausführungsbeispiel bei einem Wechselstrominnenwiderstand der Verstärkerschaltung von 600 Ω z. B. mit 3 mA gewählt werden und liegt somit um mindestens den Faktor 3 niedriger als bei bekannten Lösungen.

Anstelle der Diode 11 kann auch eine Signalquelle 12 vorgesehen sein, die einen Verstärker umfaßt, dessen Ausgangsgleichspannung mittels einer Diode den gleichen Temperaturgang aufweist, wie der Punkt 20 der Verstärkerschaltung A.

## Ansprüche

1. Verstärkerschaltung mit vorgebbarem Wechselstrominnenwiderstand mit Fernspeisung über eine Übertragungsleitung (a, b), über die gleichzeitig mit dem Speisestrom ein Wechselstromsignal von oder zu der Verstärkerschaltung übertragen wird, insbesondere für elektronische Fernsprechapparate, bei der der Strom einer zwischen der negativen Leitung (a) und der positiven Leitung (b) der Übertragungsleitung angeschlossenen Impedanz als Gegenkopplung der Verstärkerschaltung (A) zugeführt ist und der vorgegebene Wechselstrominnenwiderstand durch die Endstufe der Verstärkerschaltung (A) infolge der Gegenkopplung gebildet ist, dadurch gekennzeichnet, daß die Impedanz aus der Reihenschaltung (23, 24) eines ohmischen Widerstandes (23) mit einem Kondensator (24) besteht, daß die Verstärkerschaltung mit zwei NPN-Transistoren (16, 18) aufgebaut ist, wobei der Emitter des ersten Transistors (18) mit der negativen Leitung (a) der Übertragungsleitung, der Kollektor zum einen über eine Konstantstromquelle (17) mit der positiven Leitung (b) der Übertragungsleitung und zum anderen mit der Basis des zweiten Transistors (16) verbunden ist, der Kollektor des zweiten Transistors mit der positiven Leitung (b) der Übertragungsleitung und der Emitter des zweiten Transistors (16) zum einen über einen ersten Widerstand (15) mit der negativen Leitung (a) der Übertragungsleitung und zum anderen über einen zweiten Widerstand (14) zum einen mit der Basis des ersten Transistors (18) und zum anderen über einen dritten Widerstand (13) mit einer Signalquelle (11, 12) verbunden ist, daß der Kondensator (24) der Reihenschaltung (23, 24) mit seinem freien Ende an die positive Leitung (b) der Übertragungsleitung und der Widerstand (23) an eine Diode (22) einer an der negativen Leitung (a) liegenden, aus einer Diode (22) und einem dritten NPN-Transistor (21) bestehenden Stromspiegelschaltung angeschlossen ist, bei der der Kollektor des dritten Transistors (21) zum einen über eine zweite Konstantstromquelle (19) mit der positiven Leitung (b) der Übertragungsleitung und zum anderen mit der Basis des ersten Transistors (18) verbunden ist und daß parallel zum Kondensator (24) der Reihenschaltung (23, 24) eine Konstantstromquelle (25) geschaltet ist, die durch den ohmischen Widerstand (23) einen konstanten Strom treibt und zwischen dem ohmischen Widerstand (23) und dem Kondensator (24) ein zwischen den Leitungen (a, b) der Übertragungsleitung geschalteter Querregler (26 bis 28) angeschlossen ist.

2. Schaltung nach Anspruch 1, dadurch gekennzeichnet, daß der Querregler (26 bis 28) eine aus einem PNP-Transistor (27) bestehende komplementäre Darlingtonschaltung ist, bei der die als Eingang dienende Basis des PNP-Transistors (26) zwischen dem ohmischen Widerstand (23) und dem Kondensator (24) der Reihenschaltung (23, 24) angeschlossen ist, bei der der Emitter des PNP-Transistors (26) über einen Widerstand (28) mit der positiven Leitung (b) der Übertragungsleitung und der Emitter des vierten NPN-Transistors (27) direkt mit der negativen Leitung (a) der Übertragungsleitung verbunden ist.

3. Schaltung nach einem der Ansprüche 1 oder 2, dadurch gekennzeichnet, daß die der Verstärkerschaltung zugeführte Signalspannung (12) durch eine in Flußrichtung betriebene Diode (11) gegen Temperaturdrift ihrer Gleichspannungsänderungen gegenüber der negativen Leitung (a) der Übertragungsleitung stabilisiert ist.

## Claims

1. Amplifier circuit of predeterminable alternating current internal resistance with remote supply through a transmission line (a, b), over which an alternating current signal from or to the amplifier circuit is transmitted simultaneously with the supply current, particularly for electronic telephone instruments, in which the current of an impedance connected between the negative line (a) and the positive line (b) of the transmission line is fed as negative feedback to the amplifier circuit (A) and the predetermined alternating current internal resistance is formed through the output stage of the amplifier circuit (A) in consequence of the negative feedback, characterised thereby, that the impedance consists of the series connection (23, 24) of an ohmic resistor (23) with a capacitor (24), that the amplifier circuit is built up with two NPN-transistors (16, 18), wherein the emitter of the first transistor (18) is connected with the negative line (a) of the transmission line, the collector for one thing through a constant current source (17) with the positive line (b) of the transmission line and for the other with the base of the second transistor (16), the collector of the second transistor with the positive line (b) of the transmission line and the emitter of the second transistor (16) for one thing through a first resistor (15) with the negative line (a) of the transmission line and for the other through a second resistor (14) for one thing with the base of the first transistor (18) and for the other through a third resistor (13) with a signal source (11, 13), that the capacitor (24) of the series connection (23, 24) is connected by its free end to the positive line (b) of the transmission line and the resistor (23) to a diode (22) of a current-imaging circuit, which is connected to the negative line (a), consists of a diode (22) and a third NPN-transistor (21) and in which the collector of the third transistor (21) is connected for one thing through a second constant current source (19) with the positive line (b) of the transmission line and for the other with the base of the first transistor (18) and that a constant current source (25) is connected in parallel with the capacitor (24) of the series connection (23, 24) and drives a constant current through the ohmic resistor (23) and a parallel regulator (26 to 28), which is connected between the lines (a, b) of the transmission line, is connected between the ohmic resistor (23) and the capacitor (24).

2. Circuit according to claim 1, characterised thereby, that the parallel regulator (26 to 28) is a complementary Darlington circuit, which consists of a PNP-transistor (27) and in which the base — serving as input — of the PNP-transistor (26) is connected between the ohmic resistor (23) and the capacitor (24) of the series connection (23, 24) and the emitter of the PNP-transistor (26) is connected through a resistor (28) with the positive line (b) of the transmission line and the emitter of the fourth NPN-transistor (27) directly with the negative line (a) of the transmission line.

3. Circuit according to one of the claims 1 or 2, characterised thereby, that the signal voltage (12) fed to the amplifier circuit is stabilised through a diode operated in conductive direction against temperature drift of its DC voltage changes relative to the negative line (a) of the transmission line.

**Revendications**

1. Circuit amplificateur comportant une impédance interne prédéterminable, avec alimentation par batterie centrale à l'aide d'une ligne de transmission (a, b) qui, en même temps que le courant d'alimentation, transmet un signal alternatif à partir du ou vers le circuit amplificateur, en particulier pour des appareils téléphoniques électroniques, et dans lequel le courant d'une impédance connectée entre le conducteur négatif (a) et le conducteur positif (b) de la ligne de transmission est appliqué sous forme de contreréaction au circuit amplificateur (A) et l'impédance interne prédéterminée est formée par l'étage final du circuit amplificateur (A) du fait de la contreréaction, ledit circuit étant caractérisé en ce que l'impédance est constituée par le couplage en série (23, 24) d'une résistance pure (23) et d'un condensateur (24) ; le circuit amplificateur est constitué par deux transistors NPN (16, 18), l'émetteur du premier transistor (18) étant relié au conducteur négatif (a) de la ligne de transmission, le collecteur étant relié d'une part au conducteur positif (b) de la ligne de transmission, par une source de courant constant (17), et d'autre part à la base du second transistor (16), le collecteur du second transistor étant relié au conducteur positif (b) de la ligne de transmission et l'émetteur du second transistor (16) étant relié d'une part au conducteur négatif (a) de la ligne de transmission, par une première résistance (15), et d'autre part à la base du premier transistor (18), par une seconde résistance (14), et à une source de signal (11, 12), par une troisième résistance (13) ; la borne libre du condensateur (24) du couplage en série (23, 24) est reliée au conducteur positif (b) de la ligne de transmission et la résistance (23) est reliée à une diode (22) d'un circuit à courant image, constitué par une diode (22) et un troisième transistor NPN (21), et dans lequel le collecteur du troisième transistor (21) est relié d'une part au conducteur positif (b) de la ligne de transmission, par une seconde source de courant constant (19), et d'autre part à la base du premier transistor (18) ; et le condensateur (24) du couplage en série (23, 24) est en parallèle avec une source de courant constant (25), qui fait circuler un courant constant dans la résistance pure (23), et un régulateur transversal (26 à 28), branché entre les conducteurs (a, b) de la ligne de transmission, et connecté entre la résistance pure (23) et le condensateur (24).

2. Circuit selon revendication 1, caractérisé en ce que le régulateur transversal (26 à 28) est un circuit de Darlington complémentaire, constitué par un transistor PNP et dans lequel la base du transistor PNP (26) constituant l'entrée est connectée entre la résistance pure (23) et le condensateur (24) du couplage en série (23, 24), l'émetteur du transistor PNP (26) est relié par une résistance (28) au conducteur positif (b) de la ligne de transmission, et l'émetteur du quatrième transistor NPN (27) est relié directement au conducteur négatif (a) de la ligne de transmission.

3. Circuit selon une des revendications 1 ou 2, caractérisé en ce qu'une diode (11) fonctionnant dans le sens direct stabilise la tension du signal (12) appliquée au circuit amplificateur contre la dérive thermique de ses variations de tension continue par rapport au conducteur négatif (a) de la ligne de transmission.

FIG.1

FIG.2